Europäisches Patentamt

European Patent Office

Office européen des brevets

(11) Publication number: **0 222 035**
**A1**

## (12) EUROPEAN PATENT APPLICATION

(21) Application number: **85114335.4**

(22) Date of filing: **12.11.85**

(51) Int. Cl.⁴: **F16B 7/18**

(43) Date of publication of application:
**20.05.87 Bulletin 87/21**

(84) Designated Contracting States:
**AT BE CH DE FR GB IT LI LU NL SE**

(71) Applicant: **Erico Elektrotechnische Spezialfabrik GmbH**

**D-6791 Schwanenmühle(DE)**

(72) Inventor: **Bowmer, G.M.**
**c/o Erico Europa B.V. Lovense Kanaaldijk 7**
**NL-5046 AV Tilburg(NL)**

(74) Representative: **Gille, Christian, Dipl.-Ing. et al Türk, Gille + Hrabal Patentanwälte Bruckner Strasse 20**
**D-4000 Düsseldorf 13(DE)**

(54) **Space frame girder joint.**

(57) A space frame girder joint (6) comprises two portions (7,8) to be interconnected with one another, each of said portions being attached to one end of a space frame girder (1,2) having at least two longitudinal extending girder elements (3,4) arranged in a fixed relation parallel to one another. At the ends of each opposing girder element (3,4) an externally threaded male bolt element (7) and a matching internally threaded female nut element (8), respectively, are provided, the cooperating threaded bolt and nut portions of said elements (7 and 8) being tapered.

FIG. 5

## Space frame girder joint

The invention relates to a space frame girder joint, comprising two portions to be connected with one another, each of said portions being attached to one end of a space frame girder having at least two longitudinal extending girder elements arranged in a fixed relation parallel to one another.

Space frame girders having at least two longitudinall extending girder elements are used for transfering loads along the longitudinal axis of such elements. Since space frame girders cannot exceed a certain length it is for several applications necessary to interconnect two or more of such girders thus that loads can be transferred along the longitudinal axes of all girder elements of the individual space frame girders.

For interconnecting space frame girders having two or more longitudinal extending girder elements it is known to fix to the ends of the girder elements L-shaped connecting members, one flange thereof being interconnected with the girder element while the other flange extends rectangularly away from the space frame girder and contains holes for receiving bolt elements for interconnection two of such space frame girders. This, however, has the disadvantage that the fixing elements, i.e. the bolt elements, are offset to the axes of the longitudinal extending girder elements so that at the girder joint axial loads or tensions cannot be transferred directly but must be transferred in form of a bypass.

On the other hand, it is not possible to use as joint member for the longitudinal extending girder elements of space frame girders parallel threaded runners or nuts in practice since it is not possible to obtain perfect pitch synchronism and/or perfect axial alignment of the parallel internal thread of a nut and the parallel external thread of a bolt member if several of such members are necessary as for interconnecting space frame girders having two or more longitudinal extending girder elements.

To assemble a parallel threaded bolt with a corresponding nut it is necessary to bring the "start" points of the two threads together and to have the axes of both parts closely aligned. If two or more parallel threaded elements are mutually fixed relative to one another the necessary conditions for assembly are difficult and cannot be achieved within the practical cost limits of construction hardware and accessories.

The object of the invention is to provide a space frame girder joint for space frame girders having at least two longitudinal extending girder elements which enables it to directly transfer loads along the axes of the individual longitudinal extending girder elements of the space frame girders interconnected with one another.

In order to solve this object, the invention proposes a space frame girder joint comprising the features of claim 1. Preferred improvements and embodiments of the invention are subject of the subclaims.

The girder joint of the present invention uses a combination of a parallel thread and a tapered thread for each connecting joint between two coaxial longitudinal extending girder elements of two space frame girders which enables to align and to directly interconnect the longitudinal extending girder elements of space frame girders thus that axial loads can directly be transferred, wherein no synchronism or perfect alignment of the joint elements is necessary for accurately interconnecting the same. If there is substantial disalignment between the nut and bolt members of one interconnecting point of the joint before interconnecting them, alignment and the necessary mesh of the bolt and nut threads can easily be achieved, so that the longitudinal extending girder elements of the interconnected space frame girders are brought into the desired alignment for directly transferring axial loads.

Further objects, features and advantages of the present invention are hereinafter explained with reference to the attached drawings.

In the drawings some embodiments of the space frame girder of the present invention are - schematically shown, wherein

Fig. 1 is a side view of two interconnected space frame girders and an end view of one of said girders being interconnecting by coupler elements attached between them,

Fig. 2 is a plan view of the two space frame girders of Fig. 1,

Fig. 3 is a detail of the two coupler elements of which one is an internal threaded tapered nut element and the other is an external threaded tapered male bolt element, both being provided at the end of a longitudinal girder element, both of such elements are to be inserted into one another for interconnecting the same,

Fig. 4 is a detail similar to Fig. 3, wherein it is shown how the external threaded male bolt element and a corresponding internal threaded nut element can be interconnected if not exactly aligned to one another,

Fig. 5 is a further detail of the space frame girder coupling between an external threaded male bolt element and a corresponding internal threaded nut element and

Fig. 6 a longitudinal section of the ends of two girder elements interconnected in accordance with the present invention.

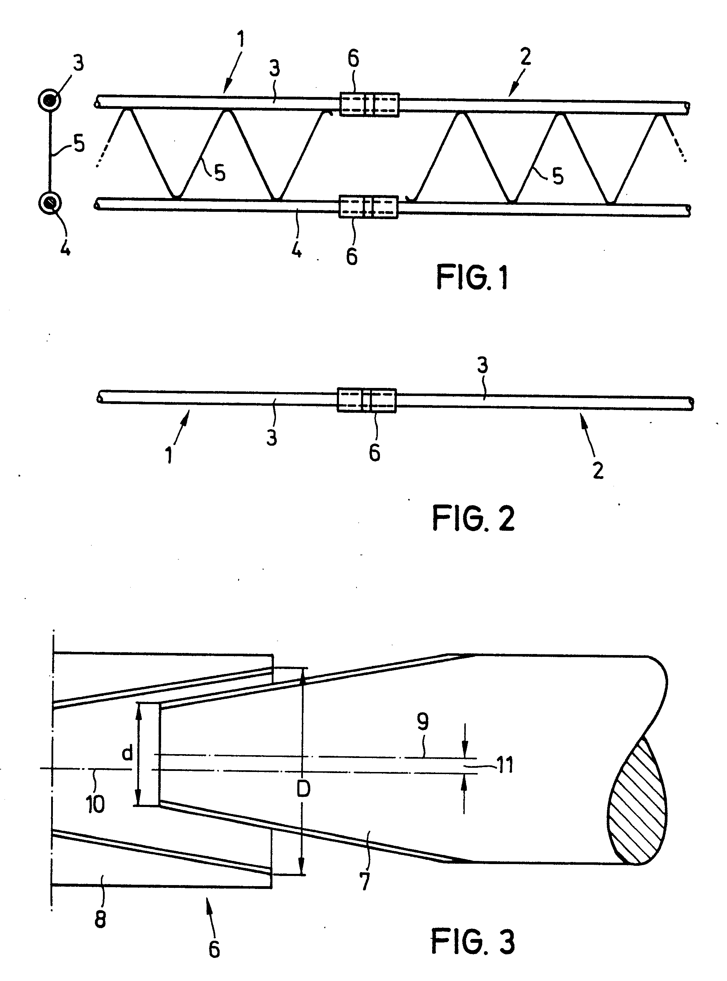

In figure 1 and 2 two space frame girders 1 and 2 are shown each comprising of two parallel girder elements 3 and 4 which are held in parallel positions by space frame elements 5 as usual in space frame girders.

Each girder element 3 and 4 comprises of a hollow tube or solid bar.

The two space frame girders 1 and 2 are interconnected by couplers 6 provided at the opposing ends of the girder elements 3 and 4 of both space frame girders 1 and 2 and which are shown and described in detail in Figures 3 to 6 and are described hereinafter.

The space frame girders 1 and 2 are joined by the couplers 6 in such a way as to transfer loads within the axes of the interconnected girder elements 3 and 4 with little disturbence to the alignement of the space frame girder joint 6.

As shown more in detail in Figure 3, each coupler 6 comprises a tapered externally threaded male bolt 7 which is connected to the end of one tube-like girder element 3 or 4, and a corresponding internally threaded female nut element 8 fixed to the end of an opposing tube-like girder element of another space frame girder.

As shown in Figure 3, the small diameter d end of the tapered male bolt 7 can enter the large diameter d mouth of its matching female nut without the necessity to being perfectly axially aligned, i.e. both elements can be interconnected even if their axes 9 and 10 are offset a certain distance 11 because by screwing the external threaded male bolt 7 into its matching internal threaded female nut 8 both elements will come into axial alignment in order to be able to transfer loads within the axes of the interconnected girder elements.

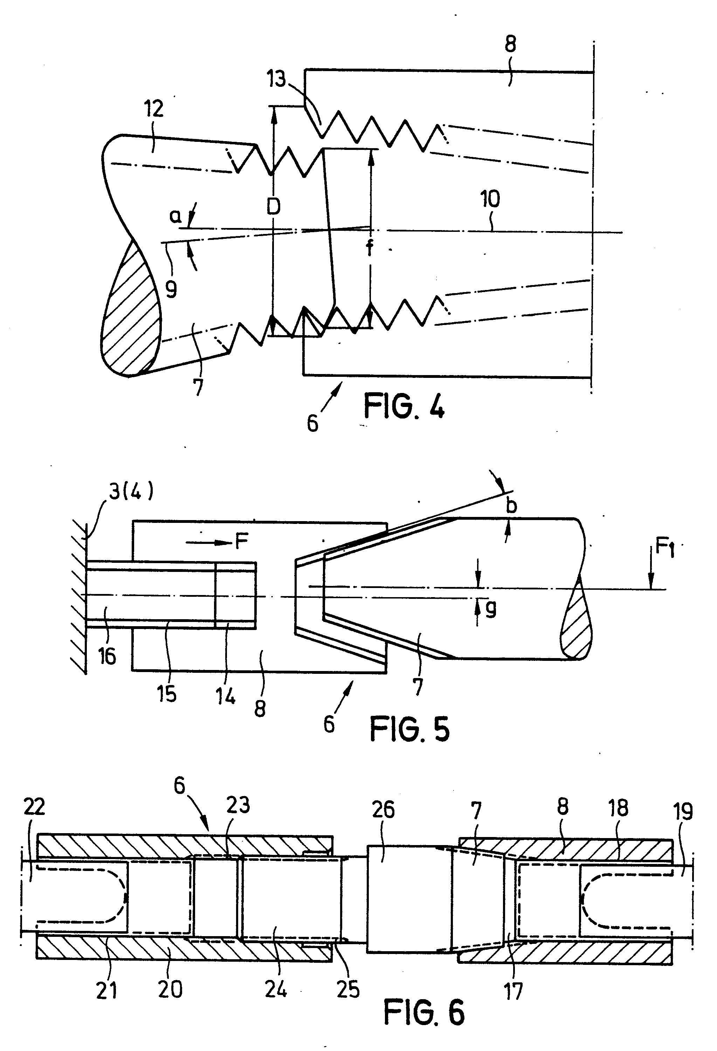

From Figure 4 can be taken how the coupler 6 is interconnected if bolt 7 and nut 8 are not in angular alignment. Depending on the pitch and the diameter of the matching threads 12 and 13 of bolt 7 and nut 8, respectively, also an angular displacement of several degrees is possible for obtaining axial self alignment. The maximum possible displacement angle a which still enables self alignment of interconnecting bolt 7 and nut 8 is

$$a = \tan^{-1} \frac{p}{2\,f}$$

wherein f is the internal diameter of the first thread of the external thread 12 of bolt 7 and p is the pitch of the matching threads 12 and 13.

In practice, the angular displacement tolerance is in a special embodiment of the invention near 3 degrees, i.e. a max = 3°.

From Figure 5 can be taken that nut 8 of coupler 6 screwed with an parallel internal thread 14 onto the external thread 15 of a stud 16 which is fixed to one end of girder element 3 or 4, the threads 12 and 13 having the same pitch as above.

From Figure 5 can be understood the mechanical advantage of a taper thread coupler wherein a thread is usefull for exerting a force onto the interconnected parts to bring the axes thereof into line. It is to be understood that the force F, is dependent on the pitch of matching threads 12 and 13, the taper angle b, and the moment applied to turn nut 8.

If pitch and taper angle b of threads 12 and 13 are suitably selected the resulting mechanical advantage is great enough to force the longitudinal elements of interconnected space frame girders into axial alignment by the connecting action.

In Figure 6 is shown one practical embodiment of coupler 6. A nut 8 having an internal threaded tapered hole 17 at one end is provided with an axial cylindrical bore 18 for receiving the stud 19 at one end of a longitudinal space frame girder element like elements 3 and 4 of the space frame girders shown in Figures 1 and 2. Nut 8 may be welded directly to element 3 or 4.

A bushing 20 is provided with a longitudinal cylindric bore 21 for receiving stud 22 provided at the end of another longitudinal girder element, or bushing 20 may be welded directly to element 3 or 4. At the opposing end, bushing 20 contains an internal parallel thread 23 into which a bolt 24 having a matching external parallel thread 25 is screwed. At the outer end of bolt 24 a tapered bolt 7 is provided which is to be screwed into nut 8.

The intermediate section 26 of this element is to be used as handle or can be provided with suitable handling means in order that bolt 7 can be turned when screwed into nut 8 which is possible since bolt 24 is screwed with sufficient length into thread 23 of bushing 20.

## Claims

1. Space frame girder joint (6), comprising two portions (7,8) to be interconnected with one another each of said portions being attached to one end of a space frame girder (1,2) having at least two longitudinal extending girder elements (3,4) arranged in a fixed relation parallel to one another, **characterized** in that is comprises at the ends of each opposing girder element (3,4) an externally threaded male bolt element (7) and a matching internally threaded female nut element (8), respectively, the cooperating threaded bolt and nut portions being tapered.

2. The joint as claimed in claim 1, characterized in that the maximum possible angular displacement between each bolt element (7) and the corresponding nut element (8) for coupling follows the equation

$$a = \tan^{-1} \frac{p}{2\,f} \quad \text{degrees},$$

wherein a is the misalignment, p is the pitch of the threads and f is the tip diameter of the tapered thread of bolt element (7).

3. The joint as claimed in claim 1 or 2, characterized in that the maximum possible desplacement of the axes of the bolt element (7) and the nut element (8) for coupling is $\frac{D - d}{2}$ (mm), wherein D is the biggest diameter of the internal conical or tapered thread (13) of the nut element (8) and d is the smallest diameter of the externally threaded conical or tapered male bolt element (7).

4. The joint as claimed in anyone of claims 1 to 3, characterized in that the nut element (8) and the bolt element (7) each are provided with a socket - (8;20) connected to the end of one longitudinal girder element (3 or 4).

5. The joint as claimed in claim 4, characterized in that the nut element (8) and its socket are made in one piece.

6. The joint as claimed in claim 4, characterized in that the bolt element (7) is threaded with a parallel thread (25) into a socket-like tube portion - (20).

7. The joint as claimed in claim 6, characterized in that the parallel thread (25) has the same pitch (p) as the tapered or conical thread (12) of the male bolt element (7).

8. The joint as claimed in claim 6 or 7, characterized in that a lock screw or lock nut is screwed onto the parallel thread (25).

FIG. 1

FIG. 2

FIG. 3

FIG. 4

FIG. 5

FIG. 6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-C- 692 061 (JUNKERS) <br> * Page 1, lines 1-5,29-30; figures 1,8,9 * | 1-3 | F 16 B 7/18 |
| A | DE-B-1 559 545 (HÜNNEBECK) <br> * Figure 1 * | 1 | |
| X | GB-A- 242 501 (WILSON) <br> * Page 1, lines 67-86; figures 1,2 * | 1-5 | |
| A | DE-A-2 626 918 (MYLAEUS) <br> * Page 9, line 19 - page 10, line 6; figure 1 * | 6 | |
| A | US-A-2 720 405 (KENNEDY) | | |

TECHNICAL FIELDS
SEARCHED (Int. Cl.4)

E 04 B
F 16 B

The present search report has been drawn up for all claims

| Place of search <br> THE HAGUE | Date of completion of the search <br> 31-07-1986 | Examiner <br> VAN DER WAL W |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503 03 82